(19) Europäisches Patentamt
European Patent Office
Office européen des brevets

(11) **EP 3 256 825 B1**

(12) **EUROPEAN PATENT SPECIFICATION**

(45) Date of publication and mention
of the grant of the patent:
**20.09.2023 Bulletin 2023/38**

(21) Application number: **16889604.1**

(22) Date of filing: **04.02.2016**

(51) International Patent Classification (IPC):
*G01J 3/50* $^{(2006.01)}$          *G01J 3/12* $^{(2006.01)}$
*G01J 3/51* $^{(2006.01)}$          *G01J 3/02* $^{(2006.01)}$
*G01J 3/52* $^{(2006.01)}$

(52) Cooperative Patent Classification (CPC):
**G01J 3/0251; G01J 3/0235; G01J 3/50; G01J 3/51;
G01J 3/524**

(86) International application number:
**PCT/US2016/016599**

(87) International publication number:
**WO 2017/135956 (10.08.2017 Gazette 2017/32)**

(54) **METHOD AND APPARATUS FOR COLOR MEASUREMENT OF NON-SOLID COLORS**

VERFAHREN UND VORRICHTUNG FÜR DIE FARBMESSUNG VON NICHT EINFARBIGEN OBJEKTEN

PROCÉDÉ ET APPAREIL DE MESURE DE COULEUR DE COULEURS NON SOLIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.02.2015 US 201562113684 P
06.08.2015 US 201514820077**

(43) Date of publication of application:
**20.12.2017 Bulletin 2017/51**

(73) Proprietor: **Datacolor, Inc.
Lawrenceville, NJ 08648 (US)**

(72) Inventor: **WEI, Hong
Princeton, New Jersey 08540 (US)**

(74) Representative: **Marks & Clerk LLP
15 Fetter Lane
London EC4A 1BW (GB)**

(56) References cited:
**US-A1- 2002 018 203        US-A1- 2005 134 853
US-A1- 2014 111 985        US-A1- 2015 198 522
US-B1- 6 583 879           US-B1- 7 119 930**

• **Z. MALENOVSKÝ ET AL: "Applicability of the
PROSPECT model for Norway spruce needles",
INTERNATIONAL JOURNAL OF REMOTE
SENSING, vol. 27, no. 24, 1 December 2006
(2006-12-01), pages 5315-5340, XP055507611, GB
ISSN: 0143-1161, DOI:
10.1080/01431160600762990**

**Description**

CROSS REFERENCE TO RELATED APPLICATIONS

This application claims the benefit of United States Patent Application 14/820,077, filed August 6, 2015 and United States Provisional Patent Application 62/113,684, filed February 9, 2015.

FIELD OF THE INVENTION

The present invention generally relates to the field of imaging, and more specifically relates to measuring a color of a non-solid colored sample.

BACKGROUND

Color measurement systems help to improve operational efficiency and product quality in supply chains. For example, color approval offices for the global apparel supply chain, apparel mills and dye houses, paint stores, textile printing shops, carpet manufacturers, manufacturers of wood panels, tiles, vinyl sheets, and laminates, and other industries relying on the digital color workflow require accurate color evaluation and visualization.

Measurement of non-solid colors (e.g., multiple colors or color patterns) in a sample is typically more complicated than the measurement of solid colors. Conventional approaches to measuring non-solid colors often cannot produce repeatable results. For example, some approaches rely on a lighting geometry that varies with the position relative to the sample. Furthermore, such approaches fail to adequately capture the spectral diversity needed to estimate the spectral reflectance of the sample's surfaces. US7119930B1 proposes a method of recording an image of an object using an electronic camera.

SUMMARY OF THE INVENTION

Aspects of the invention are set out in the accompanying claims. In one embodiment, an apparatus for measuring a color of a non-solid colored sample includes an integrating sphere having a sensor port, a sample port, a light port, a light source positioned near the light port for illuminating the interior of the integrating sphere, and a plurality of registration marks affixed to an interior surface of the integrating sphere, outside a periphery of the sample port. The plurality of registration marks includes a first registration mark and a second registration mark collectively providing four constraints for correcting up to four registration errors in an image, the registration errors including displacement along two axes, image dilation, and zoom. The apparatus further includes a camera positioned near the sensor port to capture a plurality of images that include a sample positioned at the sample port and the plurality of registration marks, and a plurality of color filters positioned between the integrating sphere and camera wherein each image of the plurality of images is captured using a different color filter of the plurality of color filters; and a processor (110) to control operation of the light source (108) and the camera (102). An optical axis of the camera passes from the camera, through at least one filter of the plurality of filters, and through the integrating sphere from the sensor port to the sample port.

In one embodiment, a method for measuring a color of a non-solid colored sample includes, illuminating a sample positioned near a sample port of an integrating sphere with diffuse illumination, using the integrating sphere, capturing a plurality of images of the sample through a sensor port of the integrating sphere, subsequent to the illuminating, wherein each image of the plurality of images is captured using a different color filter, wherein at least one of the plurality of images depicts a set of registration marks affixed to an interior surface of the integrating sphere, wherein the plurality of registration marks comprises: a first registration mark and a second registration mark collectively providing four constraints for correcting up to four registration errors in an image, the registration errors including displacement along two axes, image dilation, and zoom, and computing a reflectance of a portion of the sample, based on the plurality of images.

In one embodiment, a computer readable storage device contains an executable program for measuring a color of a non-solid colored sample, that, when executed, causes a processor to perform steps including controlling a light source to illuminate a sample positioned near a sample port of an integrating sphere with diffuse illumination, controlling a camera to capture a plurality of images of the sample through a sensor port of the integrating sphere, subsequent to the sample being illuminated, wherein each image of the plurality of images is captured using a different color filter, wherein at least one of the plurality of images depicts a set of registration marks affixed to an interior surface of the integrating sphere, using the registration marks to correct for registration errors due to drift of the apparatus (100) between capture of images; wherein the plurality of registration marks comprises: a first registration mark and a second registration mark collectively providing four constraints for correcting up to four registration errors in an image, the registration errors including displacement along two axes, image dilation, and zoom, and computing a reflectance of a portion of the sample, based on the plurality of images.

## BRIEF DESCRIPTION OF THE DRAWINGS

The teachings of the present invention can be readily understood by considering the following detailed description in conjunction with the accompanying drawings, in which:

FIG. 1 is a block diagram illustrating one embodiment of a system for color measurement, according to the present invention;
FIG. 2 is a schematic diagram illustrating an image of the sample port of the integrating sphere of FIG. 1 in greater detail
FIG. 3 is a flow diagram illustrating one embodiment of a method 300 for color measurement of non-solid colors, according to the present invention;
FIG. 4 is a high-level block diagram of the present invention that is implemented using a general purpose computing device; and
FIG. 5 is a block diagram illustrating another embodiment of a system for color measurement, according to the present invention.

## DETAILED DESCRIPTION

In one embodiment, the present invention is a method and apparatus for color measurement of non-solid colors. Embodiments of the invention use an integrating sphere to diffuse light, and then measure the color of a non-solid color sample using a monochrome camera that captures sequential images of the sample through multiple interference filters. The diffuse reflectance of individual pixels of pixel averages can then be inferred from the images.

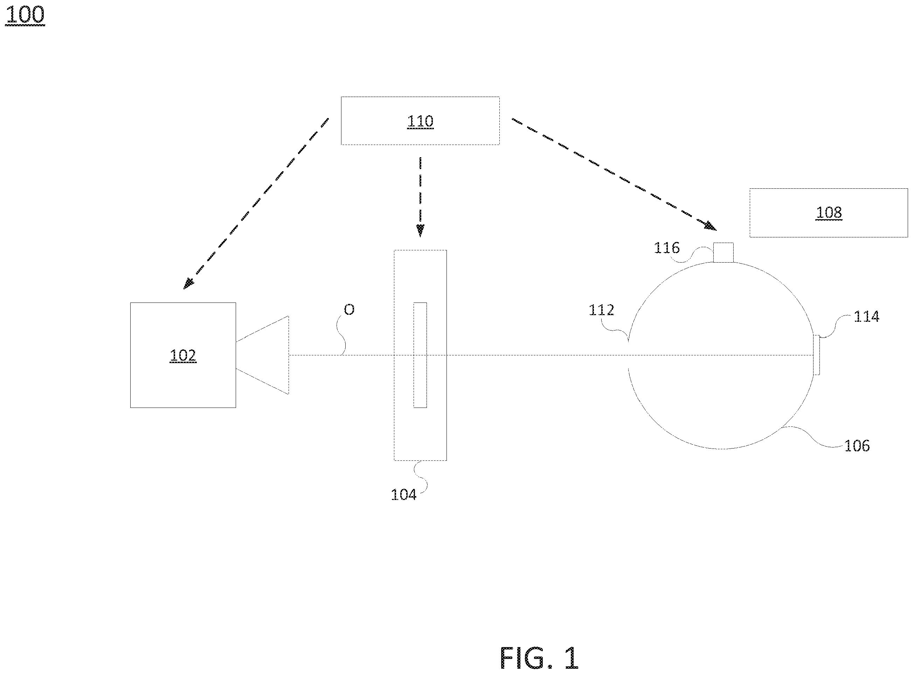

FIG. 1 is a block diagram illustrating one embodiment of a system 100 for color measurement, according to the present invention. The system 100 is designed to measure the color of a sample, and may be especially suited for the measurement of non-solid colors (e.g., multiple colors or color patterns) in the sample. The system 100 generally comprises a camera 102, a set of filters 104, and an integrating sphere 106.

In one embodiment, the camera 102 is a monochrome camera. For instance, the camera 102 may be a scientific complementary metal oxide semiconductor (sCMOS) camera. In one embodiment, the lens configuration of the camera 102 may be optimized to reduce the specular reflection from the other optical components of the system 100.

The set of filters 104 is positioned in front of the lens of the camera 102, i.e., along the optical axis O of the camera 102. In an alternative embodiment, the set of filters 104 is positioned between the lens and the camera 102. In one embodiment the set of filters 104 includes a set of multiple different interference filters. The set of filters 104 may be implemented as a filter wheel, for example. In one embodiment, the transmission spectra of the filters are evenly spaced over substantially the entirety of the visible wavelength range (e.g., approximately 400 to approximately 700 nanometers). In a further embodiment, the transmission spectrum of each filter is approximately twenty nanometers wide. Thus, in one particular embodiment, the filter wheel includes at least sixteen possible positions, but may include more or less positions in other embodiments. In one embodiment, the filter wheel is configured such that only one position of the wheel (i.e., only one filter) may be positioned in the optical axis O of the camera 102 at a time.

The integrating sphere 106 is also positioned along the optical axis O of the camera 102, on the opposite side of the set of filters 104 from the camera 102 (i.e., such that the set of filters 104 is positioned between the camera 102 and the integrating sphere 106). In one embodiment, the integrating sphere 106 has a d/8° measurement geometry. The integrated sphere 106 includes a sensor port 112, a sample port 114, and a light port 116. The sensor port 112 and the sample port 114 are aligned with the optical axis O of the camera 102. In one embodiment, the sample port 114 is a large area of view (LAV) port (e.g., a port having an area of view of at least approximately thirty millimeters). In one embodiment, the light port 116 of the integrating sphere 106 includes one or more baffles (not shown) positioned to deflect illumination provided by a light source 108.

The light source 108 is positioned near the light port 116 to illuminate the interior of the integrating sphere 106. In one embodiment, the light source 108 is a full-spectrum light source, such as a xenon flash lamp or a full-spectrum light emitting diode (LED). For instance, the light source 108 may be an LED light source mounted in a luminaire whose front surface is flush with a diffuser, which is in turn flush with the light port 116. The LED itself may be positioned one to two centimeters outside the integrating sphere 106. Alternatively, the light source 108 may be a xenon flash mounted in a cavity that is placed nearly flush with the light port 116. Or, the light source 108 may be a xenon flash mounted in a cavity and coupled to the light port 116 via a fiber optic light guide. In any one of these configurations, the integrating sphere 106 may include a baffle to prevent direct illumination of the sample port 114 by the light source 108.

The camera 102, the set of filters 104, and the integrating sphere 106 are all coupled to a microprocessor 110 (or other computing device). The microprocessor 110 may control operation of the camera 102, the set of filters 104, and the integrating sphere 106.

In the illustrated embodiment, the components of the system 100 are arranged so that that optical axis O of the camera 102 - which passes from the camera 102, through the filter wheel 104, and through the integrating sphere 106 to the sample positioned at the sample port 114 - extends in a substantially parallel orientation (i.e., parallel within a few degrees of tolerance) relative to the ground or to a support surface upon which the system 100 is placed. This horizontal arrangement of components facilitates sample loading and unloading when the system 100 is in use.

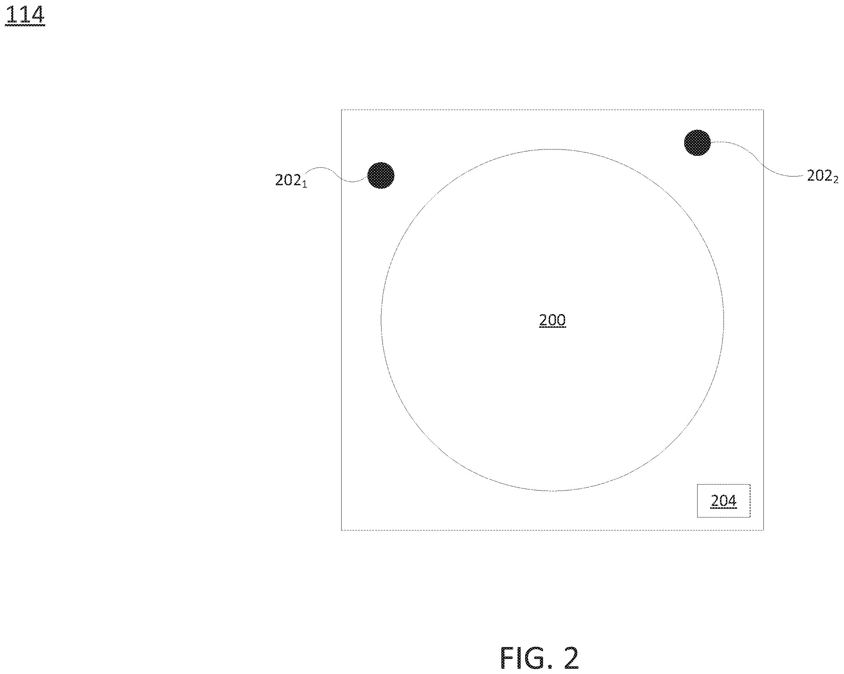

FIG. 2 is a schematic diagram illustrating an image of the sample port 114 of the integrating sphere 106 of FIG. 1 in greater detail. In particular, FIG. 2 illustrates an image of the sample port 114 as captured through the sensor port 112 of the integrating sphere 106. Thus, the image depicts the sample port 114 as seen from within the integrating sphere 106. As illustrated, the sample port 114 mainly comprises an aperture 200 formed in the body of the integrating sphere 106 and configured to receive the sample whose color is to be measured. In addition, the sample port 114 includes a set of image registration marks $202_1$- $202_3$ (hereinafter collectively referred to as "image registration marks 202").

In one embodiment, two of the image registration marks 202 are positioned outside a periphery of the aperture 200, on the interior surface of the integrating sphere 106 (i.e., image registration marks $202_1$ and $202_2$ in FIG. 2). These image registration marks 202 are used to correct for registration errors due to drift of the system 100 between capture of images. For instance, misalignment of the set of filters 104 may cause drift in the position and/or size of the images captured by the camera 102. The two registration marks 202 may be used to track the size and position of each image. In particular, the two image registration marks 202 provide four constraints (i.e., two constraints along the x axis, and two constraints along the y axis) and can correct for up to four registration errors (e.g., displacement along the x axis, displacement along the y axis, and image dilation/zoom). In a further embodiment, a third image registration mark $202_3$ may be positioned below aperture 200 and used to correct for rotation drift.

Because the intensity of the light source varies from one acquisition to the next, a reflecting area that doesn't change from flash-to-flash or from one sample to another is needed to compensate for the intensity variations. Accordingly, a reference channel is adopted as an imaged part of the integrating sphere outside the sample area. Light from the reference channel 204 is used to compensate for the intensity variations from one flash of light to the next. The reference channel 204 does not replace the white tile, because: (1) the reference channel 204 is not calibrated white; and 2) the white tile is acquired on a different flash than the sample, and so still requires compensation.

The reference channel area 204 is positioned outside a periphery of the aperture 200, and comprises a portion of the interior surface of the integrating sphere 106. The reference channel area 204 compensates for image-to-image variation in the intensity of the light source 108. The reference channel area 204 allows the reference channel to be measured simultaneously with the sample. The reference channel area 204 does not necessarily need to be a calibrated white.

The light intensity distributed over the sample port 114 may be nonuniform. The uneven distribution of illumination can be compensated for using images that are captured during conventional white tile calibration of the system 100. In one embodiment, the white tile is used as a grey card to calibrate the reflectance measurement at each pixel in an image of the sample port 114.

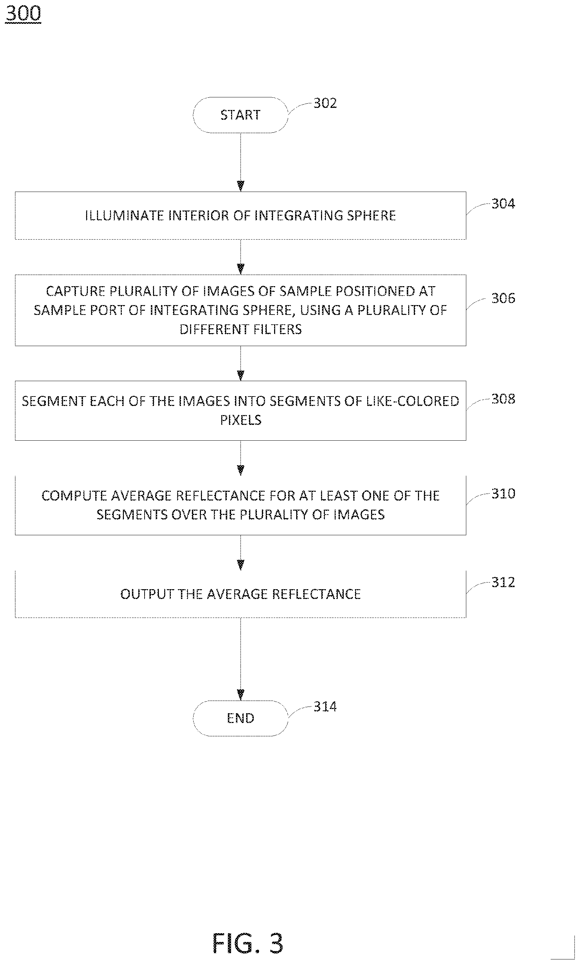

FIG. 3 is a flow diagram illustrating one embodiment of a method 300 for color measurement of non-solid colors, according to the present invention. The method 300 may be implemented, for example, by the system 100 of FIG. 1 (e.g., under the control of the microprocessor 110). Thus, reference is made in the discussion of the method 300 to various elements of FIG. 1. It will be appreciated, however, that the method 300 could be implemented by a system having a configuration that differs from the configuration illustrated in FIG. 1.

The method 300 assumes that certain steps have been performed in advance, including preparation and loading of the sample whose color is to be measured, and white reference target (e.g., tile) and black trap calibration of the color measurement system 100. Each of these steps may be performed in multiple different ways without departing from the scope of the present invention.

The method 300 begins in step 302.

In step 304, the interior of the integrating sphere 106 is illuminated. In one embodiment, the interior of the integrating sphere 106 is illuminated by the light source 108 positioned near the light port 116 of the integrating sphere. The illumination shines into the integrating sphere 106 in such a way that there is no direct path from the light source 108 to the sensor port 112 or to the sample port 114. For instance, the illumination may be deflected by one or more baffles. The illumination is thus diffused by multiple reflections from the interior of the integrating sphere 106 before it is incident on the sample positioned at the sample port 114. In one embodiment, the sample is a non-solid colored sample, such as a multi-colored or patterned textile sample.

In step 306, the camera 102 captures a plurality of images of the sample. The images are captured through the sensor port 112 of the integrating sphere 106. In one embodiment, each of the plurality of images is captured in a different band of the visible wavelength range (e.g., 400 to 700 nanometers). For instance, each image may be captured in a different twenty nanometer band of the visible wavelength range (e.g., 400 nm, 420 nm, ..., 700 nm). In one embodiment, each image is captured by placing a different filter in the set of filters 104 in front of the lens of the camera 102.

In step 308, the microprocessor 110 computes the reflectance for at least one pixel of the images. In one embodiment, the reflectance of a pixel is computed by first computing the ratio of the light intensity reflected from the pixel to the light intensity reflected from a white reference target or tile (e.g., obtained during calibration) for each captured image. Thus, the ratio is computed through each filter in the set of filters 104. In one embodiment, the reference channel is used to correct this computation for fluctuations in light intensity that may occur between the time of white tile calibration and the time the images of the sample are captured.

In one particular embodiment, the sample reflectance, $R_S$, may be calculated from a known white reflectance, $R_W$ (measured by some reference instrument), and light intensities (various quantities I) measured by the camera 102 as:

$$R_S = [R_W (I_{s2} - I_k) (I_{r1} - I_k)] / [(I_{r2} - I_k) (I_{w1} - I_k)] \qquad \text{(EQN. 1)}$$

where a subscript of "2" denotes a time of acquisition of a test sample, and a subscript of "1" denotes a time of acquisition of the white tile W. The light intensities, I, are defined as follows:

$I_{w1}$ is the intensity from the white tile, measured at time 1.
$I_{s2}$ is the intensity from the test sample, measured at time 2.
$I_{r1}$ and $I_{r2}$ are the intensities from the reference channel measured at times 1 and 2, respectively.
$I_k$ is the intensity measured from the black trap, assumed to be independent of measurement time.

EQN. 1 is expressed entirely in terms of measured light intensities and one known white reflectance ($R_W$). It can be derived from the ratio of the following:

$$R_W = b (I_{w1} - I_k) / (I_{r1} - I_k) \qquad \text{(EQN. 2)}$$

$$R_S = b (I_{s2} - I_k) (I_{r2} - I_k) \qquad \text{(EQN. 3)}$$

Where b is a scale factor that includes two effects: (1) the reference channel signal is measured at a different location than the sample port; and (2) the reference channel reflectance is not a perfect reflecting diffuser. Evaluating the ratio of EQN. 3 to EQN. 2 eliminates the factor b.

Referring back to FIG. 3, in step 310, the microprocessor 110 outputs the reflectance values, e.g., to another computing device or tool.

The method 300 ends in step 312.

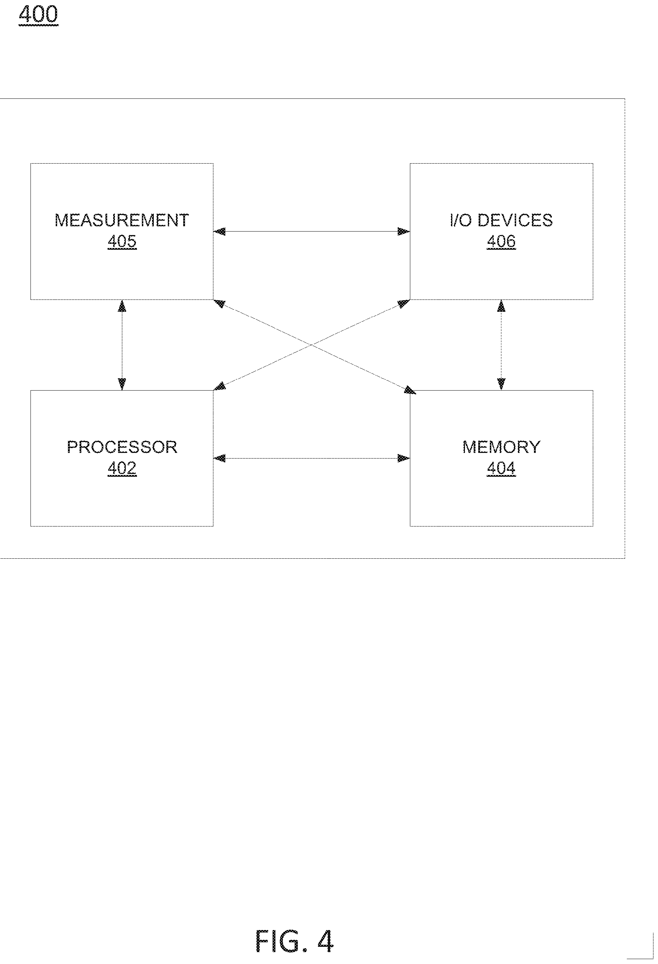

FIG. 4 is a high-level block diagram of the present invention that is implemented using a general purpose computing device 400. The general purpose computing device 400 may comprise, for example, the microprocessor 110 illustrated in FIG. 1. Alternatively, the general purpose computing device 400 may be part of another computing device that is coupled to the system 100. In one embodiment, a general purpose computing device 400 comprises a processor 402, a memory 404, a measurement module 405 and various input/output (I/O) devices 406 such as a display, a keyboard, a mouse, a stylus, a wireless network access card, an image capturing device, and the like. In one embodiment, at least one I/O device is a storage device (e.g., a disk drive, an optical disk drive, a floppy disk drive). It should be understood that the measurement module 405 can be implemented as a physical device or subsystem that is coupled to a processor through a communication channel.

Alternatively, as discussed above, the measurement module 405 can be represented by one or more software applications (or even a combination of software and hardware, e.g., using Application Specific Integrated Circuits (ASIC)), where the software is loaded from a storage medium (e.g., I/O devices 306) and operated by the processor 402 in the memory 404 of the general purpose computing device 300. Thus, in one embodiment, the measurement module 405 for color measurement of non-solid colors as described herein with reference to the preceding Figures, can be stored on a computer readable storage device (*e.g.*, RAM, magnetic or optical drive or diskette, and the like).

It should be noted that although not explicitly specified, one or more steps of the methods described herein may include a storing, displaying and/or outputting step as required for a particular application. In other words, any data, records, fields, and/or intermediate results discussed in the methods can be stored, displayed, and/or outputted to another device as required for a particular application. Furthermore, steps or blocks in the accompanying Figures that recite a determining operation or involve a decision, do not necessarily require that both branches of the determining operation be practiced. In other words, one of the branches of the determining operation can be deemed as an optional step.

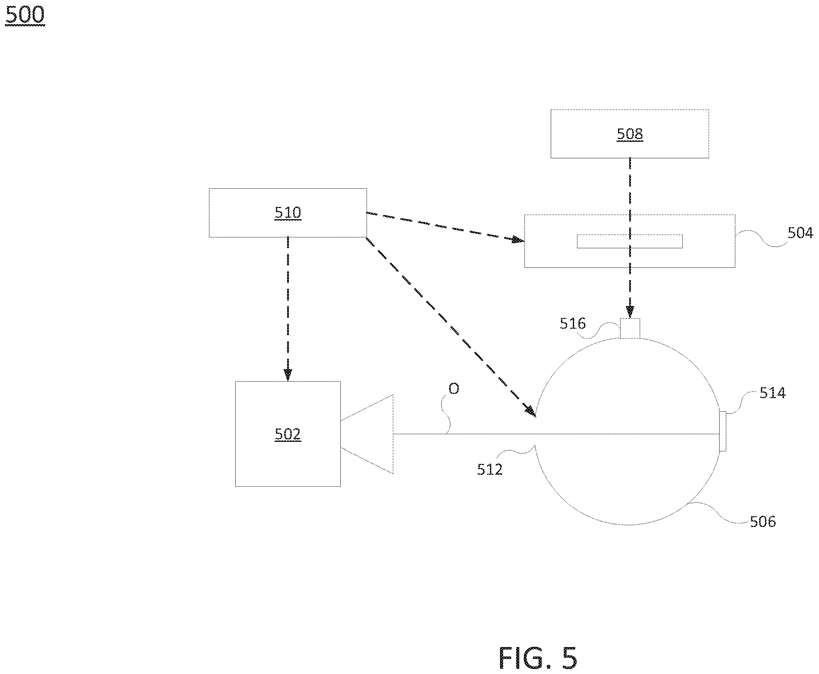

FIG. 5 is a block diagram illustrating another embodiment of a system 500 for color measurement, according to the present invention. The system 500 is designed to measure the color of a sample, and, like the system 100, may be especially suited for the measurement of non-solid colors (e.g., multiple colors or color patterns) in the sample. The system 500 generally comprises a camera 502, a set of filters 504, and an integrating sphere 506.

In one embodiment, the camera 502 is a monochrome camera. For instance, the camera 502 may be a scientific complementary metal oxide semiconductor (sCMOS) camera.

The integrating sphere 506 is positioned along the optical axis O of the camera 502. In one embodiment, the integrating sphere 506 has a d/8° measurement geometry. The integrated sphere 506 includes a sensor port 512, a sample port 514, and a light port 516. The sensor port 512 and the sample port 514 are aligned with the optical axis O of the camera 502. In one embodiment, the sample port 514 is a large area of view (LAV) port (e.g., a port having an area of view of at least approximately thirty millimeters). In one embodiment, the light port 516 of the integrating sphere 506 includes one or more baffles (not shown) positioned to deflect illumination provided by a light source 508.

The light source 508 is positioned near the light port 516 to illuminate the interior of the integrating sphere 506. In one embodiment, the light source 508 is a full-spectrum light source, such as a xenon flash lamp or a full-spectrum light emitting diode (LED).

The set of filters 504 is positioned between the light source 508 and the integrating sphere 506. In one embodiment the set of filters 504 includes a set of multiple different interference filters. The set of filters 504 may be implemented as a filter wheel, for example. In one embodiment, the transmission spectra of the filters are evenly spaced over substantially the entirety of the visible wavelength range (e.g., approximately 400 to approximately 700 nanometers). In a further embodiment, the transmission spectrum of each filter is approximately twenty nanometers wide. Thus, in one particular embodiment, the filter wheel includes at least sixteen possible positions, but may include more or fewer positions in other embodiments. In one embodiment, the filter wheel is configured such that only one position of the wheel (i.e., only one filter) may be positioned at the light port 516 of the integrating sphere 506 at a time.

The camera 502, the set of filters 504, and the integrating sphere 506 are all coupled to a microprocessor 510 (or other computing device). The microprocessor 510 may control operation of the camera 502, the set of filters 504, and the integrating sphere 506.

Thus, the system 500 is configured in a manner similar to the system 100, except that the filters 504 are positioned at the light input (i.e., between the light source 508 and the integrating sphere 506), rather than at the sensor output (i.e., between the camera 102 and the integrating sphere 106). Positioning the filters 504 to filter the light source 508 may limit the amount of light that enters the integrating sphere 506, thereby minimizing the amount by which the integrating sphere 506 heats up. The filters themselves are unlikely to heat up despite their proximity to the light source 508, because they are interference filters which reflect (i.e., do not absorb) light that is not transmitted.

The system 500 may be operated in a manner substantially similar to the system 100. Thus, the method 300, discussed above, may also be implemented by the system 500 of FIG. 5 (e.g., under the control of the microprocessor 510). However, where the plurality of images is captured in step 306, each image is captured by placing a different filter in the set of filters 104 in front of the light port 516 of the integrating sphere 506, rather than in front of the lens of the camera.

Various embodiments presented herein, or portions thereof, may be combined to create further embodiments. Furthermore, terms such as top, side, bottom, front, back, and the like are relative or positional terms and are used with respect to the exemplary embodiments illustrated in the Figures, and as such these terms may be interchangeable.

**Claims**

1. An apparatus (100) for measuring a color of a non-solid colored sample, the apparatus (100) comprising:

    an integrating sphere (106) comprising:

        a sensor port (112);
        a sample port (114);
        a light port (116);
        a light source (108) positioned near the light port (116) for illuminating the interior of the integrating sphere; and
        a plurality of registration marks (202) affixed to an interior surface of the integrating sphere (100), outside a periphery of the sample port (114), wherein the plurality of registration marks (202) comprises:
        a first registration mark ($202_1$) and a second registration mark ($202_2$) collectively providing four constraints for correcting up to four registration errors in an image, the registration errors including displacement along two axes, image dilation, and zoom;

    a camera (102) positioned near the sensor port (112) arranged to capture a plurality of images that include a sample positioned at the sample port (114) and the plurality of registration marks (202);
a processor (110) to control operation of the light source (108) and the camera (102); and a plurality of color filters (104) positioned between the integrating sphere (106) and camera (102), wherein the processor (110) is configured such that each image of the plurality of images is captured using a different color filter of the plurality of color filters;
wherein an optical axis (O) of the camera (102) passes from the camera (102), through at least one filter of the plurality of filters (104), and through the integrating sphere (106) from the sensor port (112) to the sample port (114).

2. The apparatus (100) of claim 1, wherein the camera (102) is a monochrome camera.

3. The apparatus (100) of claim 1, wherein the plurality of filters (104) is configured as a filter wheel.

4. The apparatus (100) of claim 1, wherein transmission spectra of the plurality of filters (104) are spaced over a range covering all visible wavelengths of light.

5. The apparatus (100) of claim 4, wherein the range is approximately 400 to approximately 700 nanometers.

6. The apparatus (100) of claim 1, wherein the light source (108) is a xenon flash lamp.

7. The apparatus (100) of claim 1, wherein the light source (108) is a full-spectrum light emitting diode.

8. The apparatus (100) of claim 1, wherein the optical axis (O) of the camera (102) extends in a parallel orientation relative to a support surface upon which the apparatus (100) is positioned.

9. A method (300) for measuring a color of a non-solid colored sample, the method (300) comprising:

   illuminating (304) a sample positioned near a sample port of an integrating sphere with diffuse illumination, using the integrating sphere;
   capturing (306) a plurality of images of the sample through a sensor port of the integrating sphere, subsequent to the illuminating, wherein each image of the plurality of images is captured using a different color filter of a plurality of color filters, and wherein the plurality of images depicts a set of registration marks affixed to an interior surface of the integrating sphere; and

   computing (310) a reflectance of a portion of the sample, based on the plurality of images;
   wherein the plurality of registration marks (202) comprises:
   a first registration mark ($202_1$) and a second registration mark ($202_2$) collectively providing four constraints for correcting up to four registration errors in an image, the registration errors including displacement along two axes, image dilation, and zoom.

10. The method (300) of claim 9, wherein the capturing (306) is performed using a monochrome camera, and an optical axis of the monochrome camera extends in a parallel orientation relative to a support surface upon which the integrating sphere is positioned and passes from the monochrome camera, through the color filter, through the sensor port, to the sample port.

11. The method (300) of claim 9, wherein the computing (310) comprises:
   for at least one pixel of the plurality of images, computing a ratio for the at least one pixel, where the ratio relates a light intensity reflected from the at least one pixel to a light intensity reflected from a white calibration target.

12. A computer readable storage device (406) containing an executable program (405) to cause the device of claim 1 to measure a color of a non-solid colored sample, that, when executed, causes the processor (402) to perform steps comprising:

   controlling a light source to illuminate (304) a sample positioned near a sample port of an integrating sphere with diffuse illumination;
   controlling a camera to capture (306) a plurality of images of the sample through a sensor port of the integrating sphere, subsequent to the sample being illuminated, wherein each image of the plurality of images is captured using a different color filter of a plurality of color filters, and wherein the plurality of images depicts a set of registration marks affixed to an interior surface of the integrating sphere; using the registration marks to correct for registration errors due to drift of the apparatus (100) between capture of images; and

computing (310) a reflectance of a portion of the sample, based on the plurality of images;

wherein the plurality of registration marks (202) comprises:

a first registration mark ($202_1$) and a second registration mark ($202_2$) collectively providing four constraints for correcting up to four registration errors in an image, the registration errors including displacement along two axes, image dilation, and zoom.

## Patentansprüche

1. Vorrichtung (100) zum Messen einer Farbe einer nicht einfarbigen Probe, wobei die Vorrichtung (100) umfasst: eine Ulbricht-Kugel (106), umfassend:

eine Sensoröffnung (112);
eine Probenöffnung (114);
eine Lichtöffnung (116);
eine Lichtquelle (108), die in der Nähe der Lichtöffnung (116) platziert ist, um das Innere der Ulbricht-Kugel zu beleuchten; und
eine Vielzahl von Passermarken (202), die an einer Innenfläche der Ulbricht-Kugel (100) außerhalb eines Umfangs der Probenöffnung (114) angebracht sind, wobei die Vielzahl von Passermarken (202) umfasst:

eine erste Passermarke ($202_1$) und eine zweite Passermarke ($202_2$), die zusammen vier Beschränkungen zur Korrektur von bis zu vier Passerfehler in einem Bild bereitstellen, wobei die Passerfehler eine Verschiebung entlang zweier Achsen, eine Bilddilatation, und einen Zoom einschließen;
eine Kamera (102), die in der Nähe der Sensoröffnung (112) platziert ist, und die angeordnet ist, um eine Vielzahl von Bildern aufzunehmen, die eine an der Probenöffnung (114) positionierte Probe und die Vielzahl von Passermarken (202) einschließen;
einen Prozessor (110), um den Betrieb der Lichtquelle (108) und der Kamera (102) zu steuern; und
eine Vielzahl von Farbfiltern (104), die zwischen der Ulbricht-Kugel (106) und der Kamera (102) platziert sind, wobei der Prozessor (110) so konfiguriert ist, dass jedes Bild der Vielzahl von Bildern unter Verwendung eines anderen Farbfilters der Vielzahl von Farbfiltern aufgenommen wird;
wobei eine optische Achse (O) der Kamera (102) von der Kamera (102) durch mindestens einen Filter der Vielzahl von Filtern (104) und durch die Ulbricht-Kugel (106) von der Sensoröffnung (112) zur Probenöffnung (114) verläuft.

2. Vorrichtung (100) nach Anspruch 1, wobei die Kamera (102) eine monochrome Kamera ist.

3. Vorrichtung (100) nach Anspruch 1, wobei die Vielzahl von Filtern (104) als ein Filterrad konfiguriert ist.

4. Vorrichtung (100) nach Anspruch 1, wobei Transmissionsspektren der Vielzahl von Filtern (104) über einen Bereich verteilt sind, der alle sichtbaren Wellenlängen des Lichts abdeckt.

5. Vorrichtung (100) nach Anspruch 4, wobei der Bereich ungefähr 400 bis ungefähr 700 Nanometer beträgt.

6. Vorrichtung (100) nach Anspruch 1, wobei die Lichtquelle (108) eine Xenon-Blitzlampe ist.

7. Vorrichtung (100) nach Anspruch 1, wobei die Lichtquelle (108) eine Vollspektrum-Leuchtdiode ist.

8. Vorrichtung (100) nach Anspruch 1, wobei die optische Achse (O) der Kamera (102) sich in einer parallelen Ausrichtung relativ zu einer Auflagefläche erstreckt, auf der die Vorrichtung (100) positioniert ist.

9. Verfahren (300) zum Messen einer Farbe einer nicht einfarbigen Probe, wobei das Verfahren (300) umfasst:

Beleuchten (304) einer Probe, die in der Nähe einer Probenöffnung einer Ulbricht-Kugel platziert ist, mit diffuser Beleuchtung unter Verwendung der Ulbricht-Kugel;
Erfassen (306) einer Vielzahl von Bildern der Probe durch eine Sensoröffnung der Ulbricht-Kugel, nach der Beleuchtung, wobei jedes Bild der Vielzahl von Bildern unter Verwendung eines anderen Farbfilters einer Vielzahl von Farbfiltern aufgenommen wird, und wobei die Vielzahl von Bildern einen Satz von Passermarken abbildet, die an einer Innenfläche der Ulbricht-Kugel angebracht sind; und

Berechnen (310) eines Reflexionsgrades eines Teils der Probe auf der Grundlage der Vielzahl von Bildern; wobei die Vielzahl von Passermarken (202) umfasst:

eine erste Passermarke ($202_1$) und eine zweite Passermarke ($202_2$), die zusammen vier Beschränkungen zur Korrektur von bis zu vier Passerfehler in einem Bild bereitstellen, wobei die Passerfehler eine Verschiebung entlang zweier Achsen, eine Bilddilatation und einen Zoom einschließen.

**10.** Verfahren (300) nach Anspruch 9, wobei das Erfassen (306) unter Verwendung einer monochromen Kamera durchgeführt wird und eine optische Achse der monochromen Kamera sich in einer parallelen Ausrichtung relativ zu einer Auflagefläche erstreckt, auf der die Ulbricht-Kugel positioniert ist, und von der monochromen Kamera durch den Farbfilter, durch die Sensoröffnung zu der Probenöffnung verläuft.

**11.** Verfahren (300) nach Anspruch 9, wobei das Berechnen (310) umfasst:

für mindestens ein Pixel der Vielzahl von Bildern, Berechnen eines Verhältnisses für das mindestens eine Pixel, wobei das Verhältnis eine von dem mindestens einen Pixel reflektierte Lichtintensität zu einer Lichtintensität in Beziehung setzt, die von einem weißen Kalibrierungsziel reflektiert wird.

**12.** Computerlesbare Speichervorrichtung (406), welche ein ausführbares Programm (405) enthält, um die Vorrichtung nach Anspruch 1 zu veranlassen, eine Farbe einer nicht einfarbigen Probe zu messen, das, wenn es ausgeführt wird, den Prozessor (402) veranlasst, Schritte auszuführen, umfassend:

Steuern einer Lichtquelle zum Beleuchten (304) einer Probe, die in der Nähe einer Probenöffnung einer Ulbricht-Kugel platziert ist, mit diffuser Beleuchtung;
Steuern einer Kamera zum Aufnehmen (306) einer Vielzahl von Bildern der Probe durch eine Sensoröffnung der Ulbricht-Kugel, nachdem die Probe beleuchtet wurde, wobei jedes Bild der Vielzahl von Bildern unter Verwendung eines unterschiedlichen Farbfilters aus einer Vielzahl von Farbfiltern aufgenommen wird, und wobei die Vielzahl von Bildern einen Satz von auf einer Innenfläche der Ulbricht-Kugel angebrachten Passermarken abbildet;
Verwenden der Passermarken zur Korrektur von Passfehlern, die von einer Verschiebung der Vorrichtung (100) zwischen der Aufnahme von Bildern verursacht sind; und
Berechnen (310) eines Reflexionsgrades eines Teils der Probe, basierend auf der Vielzahl von Bildern; wobei die Vielzahl von Passermarken (202) umfasst:
eine erste Passermarke ($202_1$) und eine zweite Passermarke ($202_2$), die zusammen vier Beschränkungen zur Korrektur von bis zu vier Passerfehler in einem Bild bereitstellen, wobei die Passerfehler eine Verschiebung entlang zweier Achsen, eine Bilddilatation und einen Zoom einschließen.

## Revendications

**1.** Appareil (100) de mesure d'une couleur d'un échantillon de couleur non unie, l'appareil (100) comprenant :
une sphère intégrante (106) comprenant :

un orifice de capteur (112),
un orifice d'échantillon (114),
un orifice de lumière (116),
une source de lumière (108) positionnée à proximité de l'orifice de lumière (116) pour éclairer l'intérieur de la sphère intégrante, et
une pluralité de repères d'alignement (202) apposés sur une surface intérieure de la sphère intégrante (100), à l'extérieur d'une périphérie de l'orifice d'échantillon (114), dans lequel la pluralité de repères d'alignement (202) comprend :

un premier repère d'alignement ($202_1$) et un deuxième repère d'alignement ($202_2$) fournissant conjointement quatre limitations pour corriger jusqu'à quatre erreurs d'alignement dans une image, les erreurs d'alignement incluant une déviation le long de deux axes, une dilatation d'image et un grossissement,
une caméra (102) positionnée à côté de l'orifice de capteur (112) et agencée pour capturer une pluralité d'images qui incluent un échantillon positionné au niveau de l'orifice d'échantillon (114) et de la pluralité de repères d'alignement (202),

un processeur (110) pour commander le fonctionnement de la source de lumière (108) et de la caméra (102), et

une pluralité de filtres de couleur (104) positionnés entre la sphère intégrante (106) et la caméra (102), dans lequel le processeur (110) est configuré de telle manière que chaque image de la pluralité de images est capturée en utilisant un filtre de couleur différent de la pluralité de filtres de couleur, dans lequel un axe optique (O) de la caméra (102) s'étend de la caméra (102), à travers au moins un filtre de la pluralité de filtres (104), et à travers la sphère intégrante (106) à partir de l'orifice de capteur (112) jusqu'à l'orifice d'échantillon (114).

2. Appareil (100) selon la revendication 1, dans lequel la caméra (102) est une caméra monochrome.

3. Appareil (100) selon la revendication 1, dans lequel la pluralité de filtres (104) est configurée sous forme d'une roue porte-filtres.

4. Appareil (100) selon la revendication 1, dans lequel des spectres de transmission de la pluralité de filtres (104) sont espacés sur une gamme couvrant toutes les longueurs d'onde visibles de la lumière.

5. Appareil (100) selon la revendication 4, dans lequel la gamme est d'environ 400 à environ 700 nanomètres.

6. Appareil (100) selon la revendication 1, dans lequel la source de lumière (108) est une lampe à éclats au xénon.

7. Appareil (100) selon la revendication 1, dans lequel la source de lumière (108) est une diode électroluminescente à spectre complet.

8. Appareil (100) selon la revendication 1, dans lequel l'axe optique (O) de la caméra (102) s'étend dans une orientation parallèle à une surface de support sur laquelle l'appareil (100) est positionné.

9. Procédé (300) de mesure d'une couleur d'un échantillon de couleur non unie, le procédé (300) comprenant :

l'éclairage (304) d'un échantillon positionné à proximité d'un orifice d'échantillon d'une sphère intégrante avec un éclairage diffus, en utilisant la sphère intégrante,
la capture (306) d'une pluralité d'images de l'échantillon à travers un orifice de capteur de la sphère intégrante, après l'éclairage, dans lequel chaque image de la pluralité d'images est capturée en utilisant un filtre de couleur différent d'une pluralité de filtres de couleur, et dans lequel la pluralité d'images représentent un ensemble de repères d'alignement apposés sur une surface intérieure de la sphère intégrante, et
le calcul (310) d'une réflectivité d'une partie de l'échantillon sur la base de la pluralité d'images,
dans lequel la pluralité de repères d'alignement (202) comprend :
un premier repère d'alignement ($202_1$) et un deuxième repère d'alignement ($202_2$) fournissant conjointement quatre limitations pour corriger jusqu'à quatre erreurs d'alignement dans une image, les erreurs d'alignement incluant une déviation le long de deux axes, une dilatation d'image et une magnification.

10. Procédé (300) selon la revendication 9, dans lequel la capture (306) est exécutée en utilisant une caméra monochrome, et un axe optique de la caméra monochrome s'étend dans une orientation parallèle à une surface de support sur laquelle la sphère intégrante est positionnée et s'étend de la caméra monochrome, à travers le filtre de couleur et à travers l'orifice de capteur, jusqu'à l'orifice d'échantillon.

11. Procédé (300) selon la revendication 9, dans lequel le calcul (310) comprend :
pour au moins un pixel de la pluralité d'images, le calcul d'un coefficient pour l'au moins un pixel, le coefficient établissant une relation entre une intensité de lumière réfléchie par l'au moins un pixel et une intensité de lumière réfléchie par une cible d'étalonnage blanche.

12. Dispositif de stockage lisible par un ordinateur (406) contenant un programme exécutable (405) pour amener le dispositif selon la revendication 1 à mesurer une couleur d'un échantillon de couleur non unie, qui, lorsqu'il est exécuté, amène le processeur (402) à exécuter des étapes qui comprennent :

la commande d'une source de lumière pour éclairer (304) un échantillon positionné à proximité d'un orifice d'échantillon d'une sphère intégrante avec un éclairage diffus,
la commande d'une caméra pour capturer (306) une pluralité d'images de l'échantillon à travers un orifice de capteur de la sphère intégrante, après l'éclairage de l'échantillon, dans lequel chaque image de la pluralité d'images est capturée en utilisant un filtre de couleur différent d'une pluralité de filtres de couleur, et dans lequel la pluralité d'images représentent un ensemble de repères d'alignement apposés sur une surface intérieure de la sphère intégrante,

l'utilisation des repères d'alignement pour corriger des erreurs d'alignement dues à une dérive de l'appareil (100) entre la capture d'images, et

le calcul (310) d'une réflectivité d'une partie de l'échantillon, sur la base de la pluralité d'images,

dans lequel la pluralité de repères d'alignement (202) comprend :

un premier repère d'alignement ($202_1$) et un deuxième repère d'alignement ($202_2$) fournissant conjointement quatre limitations pour corriger jusqu'à quatre erreurs d'alignement dans une image, les erreurs d'alignement incluant une déviation le long de deux axes, une dilatation d'image et une magnification.

EP 3 256 825 B1

100

FIG. 1

FIG. 2

300

```
                              ┌─────────────┐
                              │    START    │───302
                              └─────────────┘
                                     │
                                     ▼
┌─────────────────────────────────────────────────────────┐
│         ILLUMINATE INTERIOR OF INTEGRATING SPHERE         │───304
└─────────────────────────────────────────────────────────┘
                                     │
                                     ▼
┌─────────────────────────────────────────────────────────┐
│     CAPTURE PLURALITY OF IMAGES OF SAMPLE POSITIONED AT   │
│   SAMPLE PORT OF INTEGRATING SPHERE, USING A PLURALITY OF │───306
│                     DIFFERENT FILTERS                     │
└─────────────────────────────────────────────────────────┘
                                     │
                                     ▼
┌─────────────────────────────────────────────────────────┐
│  SEGMENT EACH OF THE IMAGES INTO SEGMENTS OF LIKE-COLORED │───308
│                          PIXELS                           │
└─────────────────────────────────────────────────────────┘
                                     │
                                     ▼
┌─────────────────────────────────────────────────────────┐
│   COMPUTE AVERAGE REFLECTANCE FOR AT LEAST ONE OF THE     │───310
│         SEGMENTS OVER THE PLURALITY OF IMAGES             │
└─────────────────────────────────────────────────────────┘
                                     │
                                     ▼
┌─────────────────────────────────────────────────────────┐
│              OUTPUT THE AVERAGE REFLECTANCE               │───312
└─────────────────────────────────────────────────────────┘
                                     │
                                     ▼
                              ┌─────────────┐
                              │     END     │───314
                              └─────────────┘
```

# FIG. 3

400

FIG. 4

FIG. 5

**EP 3 256 825 B1**

**REFERENCES CITED IN THE DESCRIPTION**

**Patent documents cited in the description**

- US 82007715
- US 62113684
- US 7119930 B1